# EUROPEAN PATENT APPLICATION

(11) **EP 1 396 307 A1**
(43) Date of publication of application: **10.03.2004**
(21) Application number: 02714518.4
(22) Date of filing: 05.04.2002
(51) Int. Cl.: B23Q 3/00, B23Q 3/18

(54) **PALLET POSITIONING AND FIXING DEVICE**

(30) Priority: 19.04.2001 JP 2001121066
(71) Applicant: Pascal Engineering Corporation, Hyogo, 666-0016, (JP)
(72) Inventor: KURODA, Takayuki Pascal Engineering Corporation, Hyogo 666-0016 (JP)
(74) Representative: Senior, Alan Murray
(86) International application number: PCT/JP2002/003470
(87) International publication number: WO 2002/085569

(57) **Abstract**

A pallet positioning and fixing device is provided which has a simple constitution and is capable of positioning a work piece holding pallet to a high degree of accuracy in the horizontal direction and vertical direction, with respect to a base body. In the pallet positioning and fixing device (1), a horizontal receiving face (14) is formed on the upper face of a base body (2), a ring-shaped abutting face (37) which abuts against the receiving face (14) is provided on the lower face of the pallet (3), a clamping mechanism (4) is provided in substantially the central portion of the base body (2) and the pallet (3), a first positioning mechanism (5) capable of positioning the pallet (3) in a horizontal direction and a second positioning mechanism (6) capable of positioning a pallet (3) so as to prevent the same from rotating about a vertical axis are provided on either side of the clamping mechanism (4), the pallet (3) is positioned in the vertical direction by the receiving face (14) and the abutting face (37), and is positioned in the horizontal direction by the positioning mechanism (5, 6), and the pallet (3) is fixed to the base body (2) by the clamping mechanism (4).

## Description

### TECHNICAL FIELD

The present invention relates to a device for positioning and fixing a work piece holding pallet, on a base body provided on the side of a table of a machine tool, and more particularly, to a device having reduced numbers of positioning mechanisms and clamping mechanisms and simplified constitution.

### BACKGROUND OF THE INVENTION

In a machine tool, such as a machining centre, or the like, a base body is installed on a table, or a base body as a table itself is installed, a pallet holding one or more work piece is conveyed to the base body to be fixed thereon, and machining is carried out on the work piece in a positioned and fixed state on the base body.

Recently, maximum machining accuracy of approximately 1 µm has come to be required in machining for precision machine components, and therefore the accuracy of positioning and fixing of the pallet with respect to the base body has become extremely important. More specifically, this is because machining accuracy deteriorates in accordance with the error occurring when the pallet is positioned on and fixed to the base body.

In the prior art, Japanese Patent Laid-open No. 2000-117572 discloses a positioning and fixing device of a type wherein a pallet for holding a work piece is rotated, and this rotational movement being indexed into respective small angles. In the device disclosed in this patent publication, a clamping mechanism for fixing a pallet to a pallet supporting body is provided, positioning pins for restricting the pallet such that it does not rotate about a vertical axis with respect to the pallet supporting body are provided, and the pallet performs indexed rotation together with the pallet supporting body. The clamping mechanism is constructed for clamping the pallet by means of driving downwards a collet expandable in diameter, but there is no description of any mechanism for positioning the pallet in its height position and horizontal position, with a high degree of accuracy.

Furthermore, Japanese Patent Laid-open No.8-25167 describes a positioning and fixing device wherein one set of clamping mechanism is provided in a central portion of a base body on a table, and a pallet, and four sets of positioning mechanisms are provided around the clamping mechanism. In this device, each positioning mechanism comprises a tapered shaft section on the base body side and a tapered bush on the pallet side, the pallet being positioned with respect to the base body by means of fitting the tapered bush externally of the tapered shaft section.

Other pallet positioning and fixing devices have a constitution wherein four sets of positioning and fixing mechanisms are provided, and the pallet can be positioned and fixed in the vertical direction and the horizontal direction by one set of of the positioning and fixing mechanisms, the pallet can be positioned and fixed in the vertical direction and a direction about the vertical axis passing through the centre of the pallet, by a positioning mechanism located on the opposite side from the aforementioned mechanism with respect to the centre of the pallet, and the pallet can be positioned and fixed in the vertical direction by means of the remaining two sets of positioning mechanisms.

In this pallet positioning and fixing device, a tubular shaft section, a taper collet fitted externally over this tubular shaft section, a spring member which drives the tapered collet in an upward direction, and a receiving face, are provided on a base body on the table side, and by fitting a tapered bush provided on the pallet externally over the tapered collet in close contact manner, and causing the lower face of the tapered bush to abut against the receiving face, the pallet is positioned in the vertical direction and the horizontal direction.

The device described in Japanese Patent Laid-open No. 2000-117572 is of a type wherein the pallet is fixed by one of the clamping mechanisms, but this device involves an improvement of the clamping mechanism, and the construction for positioning the pallet to a high degree of accuracy in the horizontal direction and the vertical direction with respect to the pallet supporting body is not described clearly. The positioning pin according to this patent publication serves to determine the rotational position of the pallet about a vertical axis with respect to the pallet supporting body, but it is not used to position the pallet with a high degree of accuracy in the horizontal direction.

Furthermore, the device disclosed in above Japanese Patent Laid-open No. 8-25167 achieves positioning by fitting a tapered shaft section externally over a tapered bush, in four sets of respective positioning mechanisms, but in order to position the pallet with a high degree of accuracy in the horizontal direction, extremely high machining accuracy is required in the tapered shaft section and the tapered bush. Moreover, there is no description of any kind regarding a construction for positioning the pallet to a high degree of accuracy in the vertical direction.

Furthermore, in a device having four sets of positioning and fixing mechanisms as described above, highly accurate positioning in the vertical direction and the horizontal direction is achieved by positioning the pallet in the vertical direction by causing the lower faces of the tapered bushes to abut against the receiving faces of the tubular shaft sections, and by positioning the pallet in the horizontal direction by interposing tapered collets between the tubular shaft sections and the tapered bushes. But since the pallet is positioned on and fixed to the base body by means of four sets of positioning and fixing mechanisms, then four sets of clamping mechanisms and positioning mechanisms, each having many components and a complicated structure, are required, and hence the structure of the pallet positioning and fixing device become complicated.

Moreover, since a tapered collet is provided on the base body side, effects due to the degree of close contact of the inner and outer faces of the tapered collets, and the abrasion and settling thereof, and the like, appear in all of the pallets to be set on the base body, and undesirably, as a consequence, this influences the machining error of the work piece which is arranged on the pallet.

The object of the present invention is to provide a positioning and fixing device having a simple structure whereby a pallet can be positioned with a high degree of accuracy in the horizontal direction and the vertical direction, with respect to a base body.

### DISCLOSURE OF THE INVENTION

The pallet positioning and fixing device according to the present invention is a pallet positioning and fixing device for positioning a work piece holding pallet and fixing the same releasably on a base body provided on the table or provided as the table itself of a machine tool.

This pallet positioning and fixing device is characterized in that; a horizontal receiving face is formed on an upper face of the base body, and an abutting face capable of positioning the pallet in a horizontal attitude by abutting against the receiving face is provided on a lower face of the pallet; one set of clamping mechanism capable of pulling the pallet towards the base body and fixing it thereto is provided substantially in the central portion of the base body and the pallet; and a first positioning mechanism for positioning the pallet in a horizontal direction with respect to the base body is provided on one side of the clamping mechanism, and a second positioning mechanism for positioning the pallet with respect to the base body so as to prevent the pallet from rotating about a vertical axis is provided on the other side of the clamping mechanism.

When positioning the pallet, the pallet is positioned in a horizontal attitude (in other words, it is positioned in the vertical direction) by means of the abutting face provided on the lower face of the pallet being abutted against the horizontal receiving face on the upper face of the base body, the pallet is positioned in the horizontal direction with respect to the base body by means of the first positioning mechanism, the pallet is positioned in such a manner that it does not rotate about a vertical axis with respect to the base body by the second positioning mechanism, and the pallet is fixed to the base body by means of a single set of clamping mechanism. The receiving face may be formed continuously on the upper face of the base body, or it may be constituted with a plurality of receiving faces formed at separate radial positions on the upper face of the base body.

According to this positioning and fixing device, it is possible to position the pallet in the horizontal attitude by means of a simple constitution wherein an abutting face of the pallet abuts against the receiving face of the base body. Moreover, since the pallet can be positioned in the horizontal direction with respect to the base body by means of the first positioning mechanism, and since the pallet can be positioned in such a manner that it does not rotate about a vertical axis with respect to the base body by means of the second positioning mechanism, it is possible to position the pallet with a high degree of accuracy in the vertical direction and horizontal direction, with respect to the base body.

In this way, since it is possible to provide a single set of clamping mechanism, and two positioning mechanisms, the number of clamping mechanisms and positioning mechanisms each being composed of many components and having complicated structure can be reduced to a minimum, the constitution of the pallet positioning and fixing device can be simplified, and the manufacturing costs can be reduced remarkably.

The first positioning mechanism may comprise a full circumference tapered shaft section fixed to the base body and a first tapered collet provided on the pallet in such a manner that it can be fitted tightly over the full circumference tapered shaft section from above. In this case, when positioning the pallet, the first tapered collet makes close contact with the full circumference tapered shaft section at the full face of the inner circumferential face thereof, whilst the diameter thereof changes, and the pallet is positioned with a high degree of accuracy in the horizontal direction with respect to the base body, by means of the first positioning mechanism. More particularly, since the first tapered collet is provided on the pallet, then even if wearing or settling has occurred in the first tapered collet due to repeated use, the effects thereof are not received by the base body, and hence error does not occur in the positioning of the pallet, when another pallet is positioned and fixed.

The second positioning mechanism may comprise a two-face tapered shaft section fixed to the base body and a second tapered collet provided on the pallet in such a manner that it can be fitted over the two-face tapered shaft section from above. In this case, the two-face tapered shaft section has two tapered faces bordering in the circumferential direction about a vertical axis passing through the centre of the base body, and when positioning the pallet, the second tapered collet makes close contact with the two tapered faces whilst the diameter thereof changes, and the pallet is positioned by the second positioning mechanism in such a manner that it does not rotate about the vertical axis with respect to the base body. More particularly, since the second tapered collet is provided on the pallet, then even if wearing or settling has occurred in the second tapered collet due to repeated use of the pallet, then the effects of this are not received by the base body and no error in positioning occurs if another pallet is positioned and fixed.

If the receiving face is a ring shaped face of a predetermined width and is formed as a ring shaped face which substantially intersects with the first and second positioning mechanisms, then when positioning the pallet, the abutting face of the pallet abuts against this ring-shaped face, and the pallet is positioned in the horizontal attitude.

If elastic members for respectively urging the first and second tapered collets elastically in a downward direction are provided, then since the first and second tapered collets are urged elastically in the downward direction, when positioning the pallet, the full circumference tapered shaft section makes close contact with the two face tapered shaft section whilst the diameter thereof changes, and the pallet is positioned with a high degree of accuracy in the horizontal direction with respect to the base body.

### BRIEF DESCRIPTION OF THE DRAWINGS

Fig. 1 is an exploded perspective view of a pallet positioning and fixing device according to an embodiment of the present invention;
Fig. 2 is a plan view of a pallet;
Fig. 3 is a front view of the positioning and fixing device;
Fig. 4 is a plan view of a base body;
Fig. 5 is a sectional view along line A-A in Fig. 2 of the positioning and fixing device (in a state where fixing is released);
Fig. 6 is a sectional view along line B-B in Fig. 2 of the positioning and fixing device (in a state where fixing is released);
Fig. 7 is an perspective view of the first and second tapered collet;
Fig. 8 is a sectional view of the first and second tapered collet;
Fig. 9 is an equivalent diagram to Fig. 5 of the positioning and fixing device (in a fixed state);
Fig. 10 is an equivalent diagram to Fig. 6 of the positioning and fixing device (in a fixed state);
Fig. 11 is a vertically cross sectional view of a pallet positioning and fixing device according to a modification; and
Fig. 12 is an equivalent diagram to Fig. 4 of the modification.

### PREFERRED EMBODIMENT OF THE INVENTION

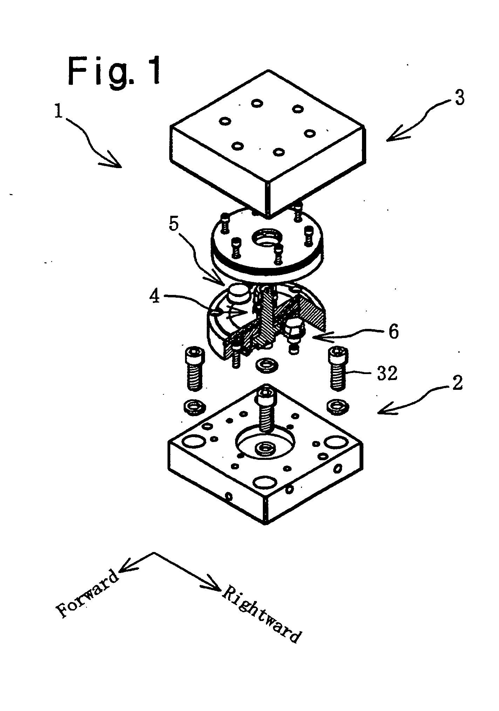

Below, a preferred embodiment of the present invention is described. As shown in Fig. 1 to Fig. 4, a pallet positioning and fixing device 1 positions a work piece holding pallet 3 for holding a work piece to be supplied to machining, on a base body 2 which is provided on the table or provided as the table itself of a machine tool, and fixes the pallet in a releasable manner.

The positioning and fixing device 1 is provided with the base body 2, a single set of clamping mechanism 4 which is capable of fixing the pallet 3 by pulling the pallet 3 towards the base body side at substantially the central portion of the pallet 3, a first positioning mechanism 5 for positioning the pallet 3 in the horizontal direction with respect to the base body 2, and a second positioning mechanism 6 for positioning the pallet 3 in such a manner that it does not turn about a vertical axis with respect to the base body 2.

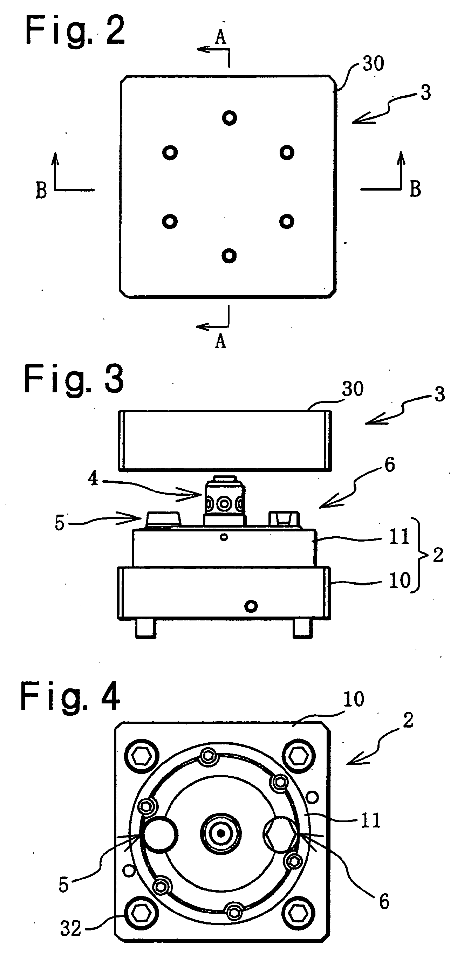

As shown in Fig. 3 to Fig. 6, the base body 2 is constituted with a base plate 10 of substantially square shape in plan view, which is fixed on the table of the machine tool, and a reference body 11, which is disposed in the central portion of the upper face of the base plate 10. Air passages 12 for supplying compressed air for removing dirt are also formed in the reference body 11. The reference body 11 comprises a lower large diameter section 11a, a cylindrical section 11b extending upwards from the large diameter section 11a, and an engaging section 11c which projects from the lower end of the large diameter section 11a. A cylinder hole 42 and a rod insertion hole 13 into which a piston rod 43b of the clamping mechanism 4 is inserted are formed inside the reference body 11.

The reference body 11 is fixed to the base plate 10 by a plurality of blots passing through the large diameter section 11a, in a state where the engaging section 11c thereof has been engaged with a hole 10a in the base plate 10. A flat receiving face 14 for positioning the pallet 3 in a horizontal attitude by receiving the pallet 3 and positioning it in the vertical direction is formed on the upper face of the large diameter section 11a. In order that the pallet 3 is caused to make close contact in a stable fashion with the receiving face 14, when the pallet 3 abuts against the receiving face 14, the receiving face 14 is a ring-shaped face having a predetermined width, being formed as a ring-shaped face which intersects substantially with first and second positioning mechanisms 5, 6.

Two accommodating holes 15, 16 for accommodating a first tapered pin 60 of the first positioning mechanism 5 and a second tapered pin 66 of the second positioning mechanism 6 are provided in two symmetrical positions with respect to a central axis C in the vicinity of the upper face of the large diameter section 11a, and recessed holes 15a, 16a which connect to the lower end of the respective accommodating holes 15, 16 are also formed therein.

Six connecting holes 17 which connect through from the rod insertion hole 13 to the outer circumferential face are formed in the cylindrical section 11b, and a ring shaped retainer 19 holding a steel ball 18 is engaged with and fixed into each of the respective connecting holes 17. The cylindrical section 11b, connecting holes 17, steel balls 18 and retainers 19 are included in the clamping mechanism 4 described hereinafter.

A dust seal 20 for preventing infiltration of cutting chips and dust is provided on inner circumferential surface of the upper end section of the cylindrical section 11b. A seal member 21 for performing sealing is provided on the outer circumferential portion of the engaging section 11c.

An air passage 12 is connected to the air passage 10b in the base plate 10, and the air passage 12 is connected to the rod insertion hole 13. A plurality of blow holes 22 passing in diagonal upwards directions are formed in the cylindrical section 11b. When the pallet 3 is fixed to the base body 2, pressurized air supplied to the air passage 12 flows into the rod insertion hole 13 and is expelled from the plurality of blow holes 22, thus removing dirt from the pallet 3 by means of air blowing.

As shown in Fig. 1, Fig. 5 and Fig. 6, the pallet 3 comprises a pallet main body 30 which is substantially square in shape and a bush 31 formed with an abutting face 37 which abuts against the receiving face 14 of the base body 2. A cylindrical accommodating hole 30a having an open lower end is formed in the lower portion of the pallet main body 30, and a recessed hole 30b connecting to the central portion of the upper end of the accommodating hole 30a is also formed. A circular disc shaped bush 31 having a circular hole formed in the central portion thereof is fitted inside the accommodating hole 30a and fixed by a plurality of bolts 32. A ring-shaped shim plate 33 for adjusting the height position of the bush 31 is installed at the upper end of the accommodating hole 30a.

Two circular cylindrical accommodating holes 31a, 31b having open lower ends are formed in a symmetrical fashion about a central axis C in the lower portion of the cylindrical bush 31, and a first tapered collet 34 of the first positioning mechanism 5 and a second tapered collet 35 of the second positioning mechanism 6 are respectively installed in these two accommodating holes 31a, 31b. An engaging section 36 with which the steel balls 18 engage when clamping is provided on the inner circumferential section of the upper end section of the bush 31, and this engaging section 36 projects towards the inner side beyond the inner circumferences of the recessed hole 30b and the shim plate 33. A horizontal ring-shaped abutting face 37 which abuts against the receiving face 14 of the large diameter section is provided on the lower face of the bush 31.

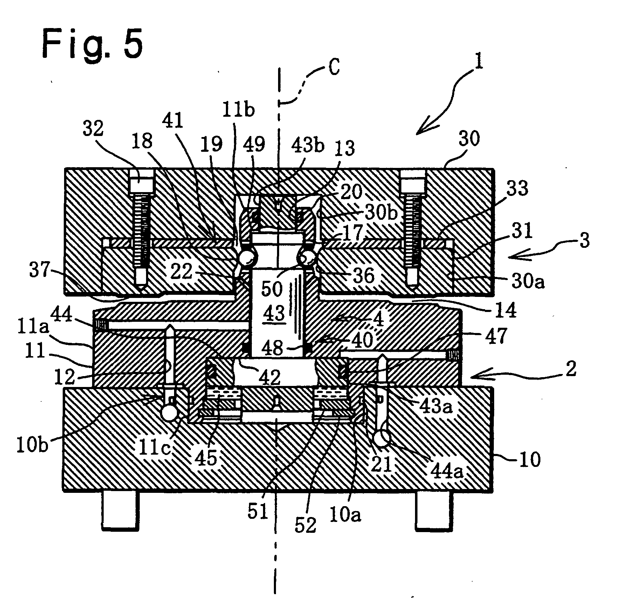

As shown in Fig. 5, the clamping mechanism 4 is provided in the central portion of the base body 2 and the pallet 3, and the clamping mechanism 4 comprises a hydraulic cylinder 40 for generating a clamping force and a clamping release force, and an engaging mechanism 41 for pulling the pallet 3 toward the side of the base body 2.

The double-acting type hydraulic cylinder 40 is disposed inside the central portion of the reference body 11, and this hydraulic cylinder 40 comprises a cylinder hole 42 formed in the reference body 11, a piston member 43 for transmitting clamping force and clamping release force, a clamping oil chamber 44 for generating clamping force, a clamping release oil chamber 45 for generating clamping release force, and a plurality of springs 46 which are capable of maintaining a clamping state, even in the event of a leak of hydraulic pressure.

The piston member 43 comprises an integrally formed piston 43a and piston rod 43b, the piston 43a being installed slidably up and down in a cylinder hole 42 and a seal member 47 being provided on the piston 43a, and the piston rod 43b is able to slide up and down in the rod insertion hole 13, a sealing member 48 for sealing the clamping oil chamber 44 also being provided. A ring-shaped engaging section 49 is provided in the vicinity of the upper end of the piston rod 43b, and a ring-shaped recess section 50 is provided on the lower portion of the ring-shaped engaging section 49.

The clamping oil chamber 44 is provided on the upper side of the piston 43a and the clamping release oil chamber 45 is provided on the lower side of the piston 43a. A ring member 51 for restricting the lower limit position of the piston 43a is installed on the lower end portion of the cylinder hole 42, and the ring member 51 is held in position by a locking ring 52. Hydraulic pressure can be supplied to the oil chamber 44 from an oil passage 44a, and hydraulic pressure can be supplied to the oil chamber 45 from an oil passage 45a. A plurality of spring accommodating holes 53 which connect to the upper end of the cylinder hole 42 are formed, and each spring 46 is disposed in each of the spring accommodating holes 53, the piston 43a being urged elastically in the downward direction by means of these springs 46.

The engaging mechanism 41 comprises the aforementioned cylindrical section 11b, the six connecting holes 17, the six steel balls 18, and the six retainers 19, and it is constituted in the following manner. Each of the steel balls 18 is held movably in the radial direction in a retainer 19 fitted inside a connecting hole 17. In clamping, each steel ball 18 is pressed towards the outer side by the ring-shaped engaging section 49 of the piston rod 43b and is caused to engage with the engaging section 36 of the bush 31, whilst in releasing of the clamp, the steel ball 18 moves towards the inner side and becomes partially accommodated in the recess section 50 of the piston rod 43b.

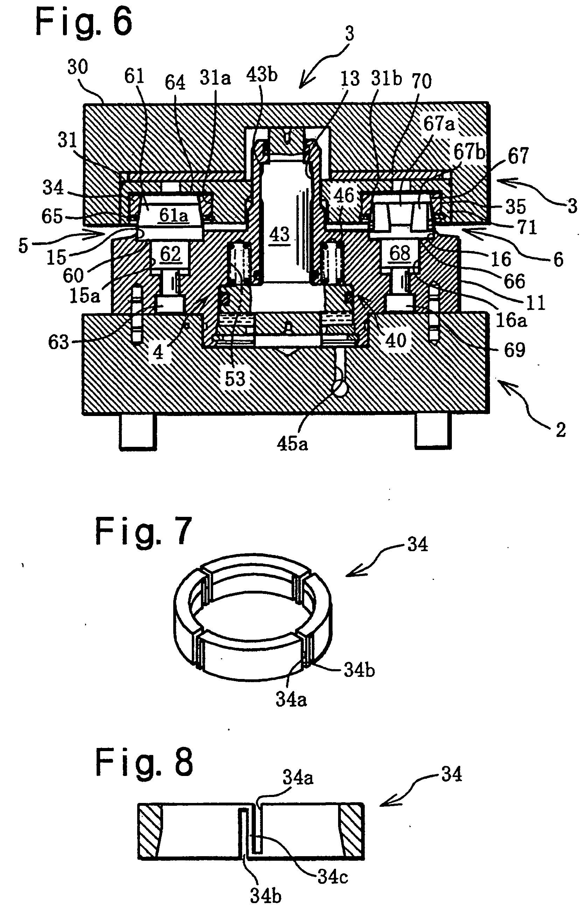

As shown in Fig. 6, the first positioning mechanism 5 is provided on one side of the clamping mechanism 4, and this first positioning mechanism 5 comprises the first tapered pin 60 which is fixed to the base body 2, and the first tapered collet 34 which is provided on the pallet 3 in such a manner that it can be fitted tightly over a full circumference of tapered shaft section 61 of the first tapered pin 60, from above.

The first tapered pin 60 comprises an integrally formed full circumference tapered shaft section 61 in the upper half portion thereof and a small diameter shaft section 62 in the lower half portion thereof. The outer circumferential face of the full circumference tapered shaft section 61 is formed with a tapered face 61a which reduces in diameter in the upward direction, and the lower end section of the full circumference tapered shaft section 61 is formed into a circular bar shape. The lower end portion of the full circumference tapered shaft section 61 fits into the accommodating hole 15 of the large diameter section 11a, and the small diameter shaft section 62 thereof fits inside the recessed hole 15a, the small diameter shaft section 62 being fixed to the reference body 11 by means of a bolt 63.

As shown in Fig. 6 to Fig. 8, the outer circumferential face of the first tapered collet 34 is formed with a circular cylindrical face and the inner circumferential face of the tapered collet 34 is formed with a tapered face which reduces in diameter in the upwards direction, in such a manner that it is able to make close contact with the tapered face 61a of the full circumference tapered shaft section 61. An groove 34a that is open at the upper end thereof, a groove 34b that is open at the lower end thereof, and an elastically deforming section 34c located between these two grooves, are formed respectively in four equidistant positions about the circumference of the tapered collet 34, and the tapered collet 34 is able to deform elastically in a direction whereby its diameter expands, by means of the elastic deformation of the four elastically deforming sections 34c. Incidentally, it is also possible to form a groove 34a with an open upper end, a groove 34b with an open lower end, and an elastically deforming section 34c, respectively, at three equidistant positions about the circumference.

This tapered collet 34 fits inside the accommodating hole 31a of the bush 31, slidably up and down, in a state of close contact with the same, and a spring washer 64 for elastically urging the tapered collet 34 in a downward direction is provided at the upper end of the accommodating hole 31a of the bush 31, between the same and the upper end of the tapered collet 34. The tapered collet 34 is engaged and held at the lower end thereof by a holding ring 65, in such a manner that it does not become detached from the bush 31.

In positioning a pallet 3 with respect to the base body 2 in the first positioning mechanism 5, when the pallet 3 is pulled towards the base body 2 by the clamping mechanism 4, then the inner circumferential face of the first tapered collet 34 makes close contact with the tapered face 61a of the full circumference tapered shaft section 61, and the outer circumferential face of the tapered collet 34 makes close contact with the inner circumferential face of the accommodating hole 31a of the bush 31, whereby the pallet 3 is positioned to a high degree of accuracy in the horizontal direction with respect to the base body 2.

As shown in Fig. 6, the second positioning mechanism 6 is provided on the opposite side to the first positioning mechanism 5 with respect to the clamping mechanism 4, and this second positioning mechanism 6 comprises the second tapered pin 66 which is fixed to the base body 2, and the second tapered collet 35 which is provided on the pallet 2 in such a manner that it can be fitted over a two-faced tapered shaft section 67 of the second tapered pin 66, from above.

The second tapered pin 66 comprises an integrally formed two-face tapered shaft section 67 in the upper half portion thereof and a shaft-shaped small diameter shaft section 68 in the lower half portion thereof. On the outer circumferential face of the two-face tapered shaft section 67, there are formed respectively on the front side and rear side, two tapered faces 67a which reduce in diameter in the upward-direction, and respectively on the left-hand side and right-hand side, two vertical faces 67b, the lower end portion of the two-face tapered shaft section 67 being formed into a circular bar shape. The lower end portion of the two-face tapered shaft section 67 fits is accommodated in the accommodating hole 16 of the large diameter section 11a, and the small diameter shaft section 68 thereof fits inside the recessed hole 16a, the small diameter shaft section 68 being fixed to the reference body 11 by means of bolts 69.

The outer circumferential face of the second tapered collet 35 is formed with a circular cylindrical face, and the inner circumferential face of the tapered collet 35 is formed with a tapered face which reduces in diameter in the upward direction, in such a manner that it can make close contact with the two tapered faces 67a of the two-face tapered shaft section 67. The second tapered collet 35 has a similar structure to the first tapered collet 34. This tapered collet 35 fits inside the accommodating hole 31b of the bush 31, slidably up and down, and a spring washer 70 for elastically urging the tapered collet 35 in a downward direction is installed at the upper end of the accommodating hole 31b of the bush 31, between the same and the upper end of the tapered collet 35. The tapered collet 35 is engaged and held at the lower end thereof by a holding ring 71, in such a manner that it does not become detached from the bush 31.

In positioning a pallet 3 with respect to the base body 2 in the second positioning mechanism 6, when the pallet 3 is pulled to the base body 2 by the clamping mechanism 4, then the front side portion and the rear side portion of the inner circumferential face of the second tapered collet 35 make close contact with the two tapered faces 67a situated on the front side and rear side of the two-face tapered shaft section 67, the outer circumferential face of the tapered collet 35 makes close contact with the inner circumferential face of the bush 31, and the pallet 3 becomes positioned in such a manner that it will not rotate in a forward or rearward direction about the first positioning mechanism 5, in other words, in such a manner that it will not rotate about a vertical axis with respect to the base body 2.

Next, operation of the positioning and fixing device 1 for a pallet as described above will be explained.

After setting of work piece on the pallet 3, as illustrated in Fig. 5 and Fig. 6, the pallet 3 is transported onto the base body 2, the front end portion of the cylindrical section 11b is inserted into the recessed hole 30b, the first tapered collet 34 is caused to coincide with the full circumference tapered shaft section 61 and the second tapered collet 35 is caused to coincide with the two-face tapered shaft section 67.

Next, when hydraulic pressure is supplied to the clamping hydraulic cylinder 40 in a state where no hydraulic pressure is supplied to the clamping release oil chamber 45, and the piston 43a is driven downwards by the hydraulic pressure, then the piston rod 43b also moves downwards. Therefore, the plurality of steel balls 18 accommodated partially in the recessed section 50 are pushed out towards the outer side by the ring-shaped engaging section 49, and each of the steel balls 18 engages with the engaging section 36 of the bush 31 and causes a clamping force to act on the bush 31, thereby causing the pallet 3 to become fixed to the base body 2.

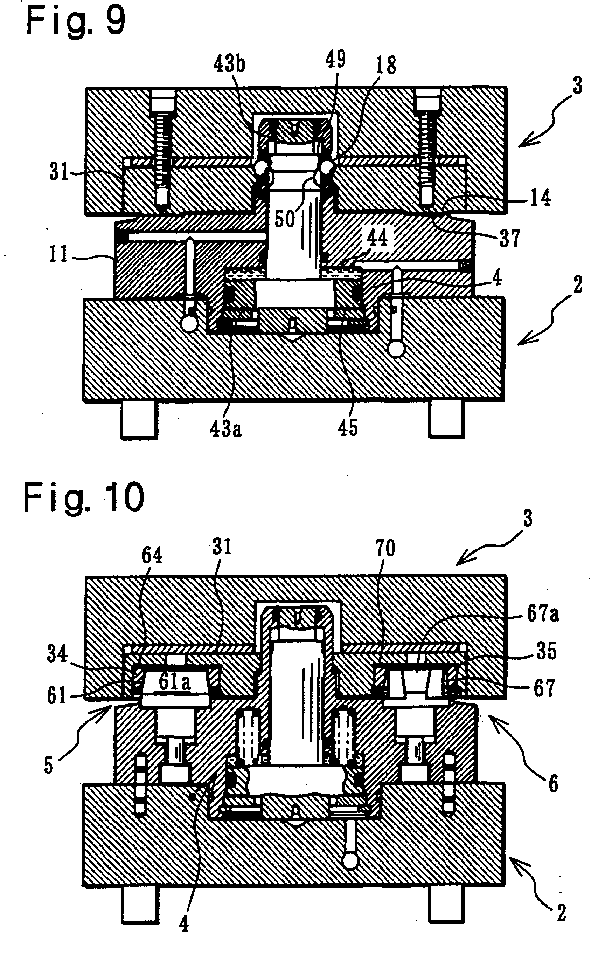

In the first positioning mechanism 5, in a state where the clamping is released as in Fig. 6, the first tapered collet 34 is urged elastically in the downward direction by the spring washer 64, and this tapered collet 34 is positioned at its lowest limit with respect to the bush 31. If the clamp is driven and the pallet 3 is lowered, the tapered collet 34 is caused to slide upwards relatively with respect to the bush 31, whilst maintaining a state of close contact with the tapered face 61a of the full circumference tapered shaft section 61, by means of elastic deformation of the elastically deforming section 34c. When the abutting face 37 of the pallet 3 has abutted against the horizontal receiving face 14 of the base body 2, and the pallet 3 has become positioned in a horizontal attitude, then the inner circumferential face of the tapered collet 34 makes close contact with the tapered face 61a of the full circumference tapered shaft section 61 and the outer circumferential face of the tapered collet 34 makes close contact with the inner circumferential face of the accommodating hole 31b of the bush 31, whereby the pallet 3 becomes positioned with a high degree of accuracy in the horizontal direction, with respect to the base body 2 (see Fig. 9, Fig. 10).

In the second positioning mechanism 6, in a state where the clamping is released as in Fig. 6, the second tapered collet 35 is urged elastically in the downward direction by the spring washer 70, and is positioned at its lowest limit with respect to the bush 31. If the clamp is driven and the pallet 3 is lowered, the tapered collet 35 is caused to slide upwards relatively with respect to the bush 31, whilst maintaining a state of close contact with the two tapered faces 67a of the two-face tapered shaft section 67, by means of elastic deformation of the elastically deforming section.

In this case, there is a very slight gap between the tapered collet 35 and the vertical faces 67b of the two-face tapered shaft section 67. When the abutting face 37 of the pallet 3 has abutted against the horizontal receiving face 14 of the base body 2, and the pallet 3 has become positioned in a horizontal attitude, then the front side portion and the rear side portion of the inner circumferential face of the tapered collet 35 make close contact with the front and rear tapered faces 67a of the two-face tapered shaft section 67 and the outer circumferential face of the tapered collet 35 makes close contact with the inner circumferential face of the accommodating hole 31b of the bush 31, whereby the pallet 3 becomes restricted from rotating about a vertical axis with respect to the base body 2 (see Fig. 9, Fig. 10).

As described above, since the pallet 3 is positioned to a high degree of accuracy in a horizontal position with respect to the base body 2, by means of the first positioning mechanism 5, and since it is positioned in such a manner that it may not rotate about the vertical axis with respect to the base body 2, by means of the second positioning mechanism 6, then the pallet 3 becomes positioned to a high degree of accuracy in the horizontal direction, with respect to the base body 2. Moreover, the abutting face 37 of the pallet 3 abuts against the receiving face 14 of the base body 2, thereby causing the pallet 3 to be positioned to a high degree of accuracy with respect to the base body 2, in the vertical direction also.

In releasing the fixing of the pallet 3 from the state shown in Fig. 9 and Fig. 10, when the hydraulic pressure in the clamping oil chamber 44 is released and hydraulic pressure is supplied to the clamping release oil chamber 45, the hydraulic pressure acting on the lower face of the piston 43a causes the piston 43a to be driven upwards against the elastic force of the springs 46, and hence the piston rod 43b also moves upwards. Consequently, the ring-shaped engaging section 49 also moves upwards, the steel balls 18 which had been pressed towards the outer side by the ring-shaped engaging section 49 move towards the inner side, and the steel balls 18 become partially accommodated in the recess section 50. Consequently, the engagement between the steel balls 18 and the bush 31 is released, and the pallet 3 is separated from the base body 2 and ejected in an upward direction.

According to the positioning and fixing device 1 for pallets described above, the following advantages are obtained.

Since the pallet 3 can be positioned in a horizontal attitude by means of the abutting face 37 of the pallet 3 abutting against the receiving face 14 of the base body 2, the pallet 3 can be positioned to a high degree of accuracy in the horizontal direction with respect to the base body 2 by means of the first positioning mechanism 5, and the pallet 3 can be positioned to a high degree of accuracy in such a manner that it does not rotate about a vertical axis with respect to the base body 2, by means of the second positioning mechanism 6, then it is possible to position the pallet 3 with a high degree of accuracy in the horizontal direction and vertical direction with respect to the base body 2, and it is possible to position the pallet with a high degree of accuracy in such a manner that it does not rotate about a vertical axis.

Since the pallet 3 is positioned in the horizontal direction with respect to the base body 2 by means of the two positioning mechanisms 5, 6, and the pallet 3 can be pulled towards and fixed to the base body 2 by means of a single set of clamping mechanism 4 provided in the approximately central portion of the base body 2 and the pallet 3, then it is possible to reduce the number of clamping mechanisms and positioning mechanisms, each being constituted by a large number of components and having a complex structure, and it is possible to simplify the structure of the pallet positioning and fixing device 1.

Since the first tapered collet 34 and the second tapered collet 35 are both provided on the pallet 3, then even in cases where wearing or settling has occurred in the tapered collets 34, 35, due to repeated use of the pallet 3, these effects are not received by the base body 2, and therefore error does not occur in the position of the pallet when another pallet 3 is positioned and fixed thereon.

Since the receiving face 14 of the base body 2 is a ring-shaped face of a predetermined width, being formed as a ring-shaped face which intersects substantially with the positioning mechanisms 5, 6, then the pallet 3 can be caused to make close contact with the receiving face 14 in a stable manner, and hence the pallet 3 can be positioned in the vertical direction.

Since spring washers 64, 70, which respectively impel the tapered collets 34, 35 elastically downward, are provided on the bush 31, then the tapered collet 34 makes close contact with the tapered face 61a of the full circumference tapered shaft section 61, and the tapered collet 35 makes close contact with the two tapered faces 67a of the two-face tapered shaft section 67, whereby it is possible to position the pallet 3 to a high degree of accuracy in the horizontal direction, with respect to the base body 2.

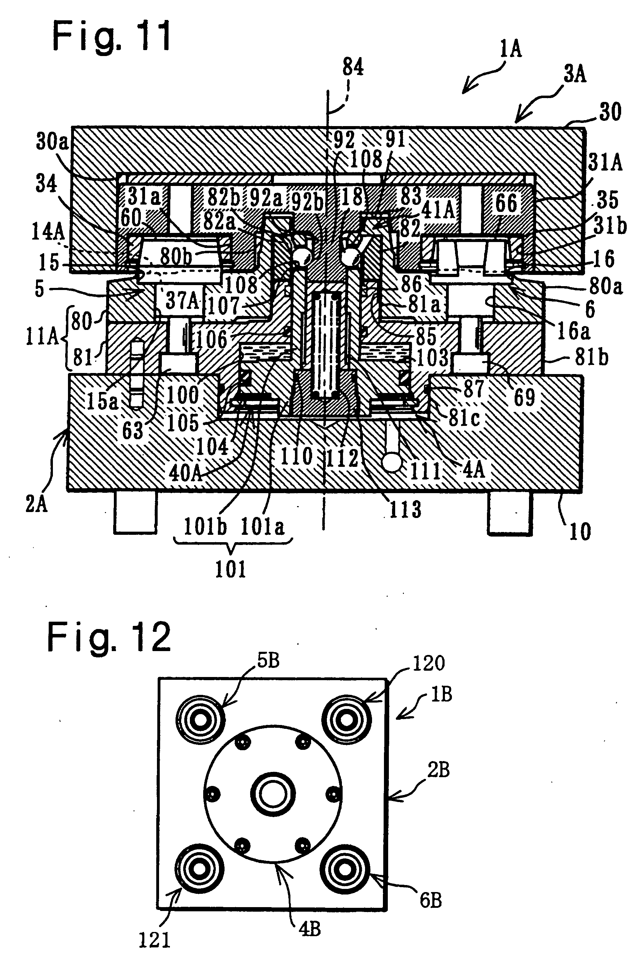

Next, various modifications wherein the foregoing embodiment is partially modified will be described.
1) As means for elastically urging the tapered collets 34, 35 downward, instead of a spring washer, it is possible to use any one of; another urging member, an elastic member made from rubber, an elastic member made from synthetic resin, or a gas cylinder or hydraulic oil cylinder.
2) It is also possible to apply the present invention to a positioning and fixing device for a pallet as illustrated in Fig. 11. In Fig. 11, the same reference numerals are used for items which are similar to those of the foregoing embodiment, and further description thereof is omitted.

The positioning and fixing device 1A is provided with a base body 2A, a single set of clamp mechanism 4A which is capable of fixing a pallet 3A by pulling the pallet 3A towards the base body 2A side at substantially the central portion of the pallet 3A, a first positioning mechanism 5 for positioning the pallet 3A in the horizontal direction with respect to the base body 2A, and a second positioning mechanism 6 for positioning the pallet 3A in such a manner that it does not turn about a vertical axis with respect to the base body 2A. The reference body 11A of the base body 2A comprises an upper reference body 80 and a lower reference body 81, the upper reference body 80 being constituted by a lower large diameter section 80a and a tubular shaped section 80b which extends upwards from the large diameter section 80a, and the lower reference body 81 being constituted by a large diameter section 81a, a tubular section 81b which extends upwards from the large diameter section 81a and an engaging section 81c which projects from the lower end of the large diameter section 81a, and the like. The tubular section 81b of the lower reference body 81 is inserted inside the large diameter section 80a and the tubular section 80b of the upper reference body 80. The reference body 11A is fitted to the base plate 10 at the engaging section 81c of the lower reference body 81, and in this state, it is fixed to the base plate 10 by means of bolts (not illustrated) which pass through the upper reference body 80 and the lower reference body 81.

A horizontal receiving face 14A for receiving and restricting the pallet 3A is formed on the upper face of the large diameter section 80a of the upper reference body 80, this receiving face 14A being a ring-shaped face of a predetermined width which is formed as a ring-shaped face that intersects substantially with the first and second positioning mechanisms 5, 6. A ring-shaped guide member 82 which guides the movement of the steel balls 18 and constitutes a portion of an engaging mechanism described hereinafter is fitted inside the tubular shaped section 80b. A collar section 83 is formed towards the inner side on the upper end section of the tubular shaped section 80b, and the movement of the guide member 82 in the upward direction is restricted by the collar section 83.

Two accommodating holes 15, 16 for accommodating a first tapered pin 60 of a first positioning mechanism 5 and a second tapered pin 66 of a second positioning mechanism 6 are provided in two symmetrical positions with respect to an axis 84, in the upper face of the large diameter section 80a, and recessed holes 15a, 16a which connect to the lower end of the respective accommodating holes 15, 16 are also formed therein.

A rod insertion hole 85 through which the piston rod 101b of the clamp mechanism 4A passes is formed inside the lower reference body 81, and a dust seal 86 for preventing infiltration of cutting chips or dust is provided on the inner circumferential face of the upper end portion of the rod insertion hole 85. A seal member 87 for performing sealing is provided on the outer circumferential portion of the engaging section 81c.

The pallet 3A comprises a pallet main body 30 which is substantially square in shape, and a bush 31A formed with an abutting face 37A which abuts against the receiving face 14A of the base body 2A. The pallet main body 30 is similar to that of the aforementioned embodiment, and the bush 31A is fitted into the accommodating hole 30a formed on the lower portion of the pallet main body 30 and fixed by a bolt.

Two circular tube shaped accommodating holes 31a, 31b, into which first and second tapered collets 34, 35 are installed symmetrically with respect to the axis 84, are formed in the lower portion of the circular tube shaped bush 31A, these holes 31a, 31b being open at the lower ends thereof. A recessed hole 91 in which the tubular shaped section 80b of the upper reference body 80 is accommodated is formed having a open lower end, in the vicinity of the axis 84 of the bush 31A, and an engaging shaft section 92 which projects downwards is formed in the central portion of the recessed hole 91. A small diameter section 92a having a reduced diameter in a neck shape is formed in the engaging shaft section 92, in an intermediate region in the upward and downward direction, and a tapered engaging section 92b with which the steel balls 18 of the clamping mechanism 4A engage in the clamping action, is formed on the front end of the small diameter section 92a. Furthermore, a horizontal, ring-shaped abutting face 37A which abuts against the receiving face 14A of the large diameter section 80a of the upper reference body 80 is provided on the lower face of the bush 31A.

The clamp mechanism 4A is provided in the central portion of the base body 2A and the pallet 3A, and the clamp mechanism 4A comprises a hydraulic cylinder 40A for generating a clamping force and a clamping release force, and an engaging mechanism 41A for pulling the pallet 3A to the base plate 10 side.

A double-acting hydraulic cylinder 40A is disposed inside the central portion of the lower reference body 81, and the hydraulic cylinder 40A comprises a cylinder hole 100 formed in the lower reference body 81, a piston member 101 for transmitting clamping force and clamping release force, a clamping oil chamber 103 for generating clamping force and a clamping release oil chamber 104 for generating clamping release force.

The piston member 101 comprises an integrally formed ring-shaped piston 101a and cylindrical shaft shaped piston rod 101b. The piston 101a is fitted slidably up and down in the cylinder hole 100, and a sealing member 105 is provided on the piston 101a. The piston rod 101b is passed slidably up and down through the inside of the rod insertion hole 85, and a sealing member 106 for sealing the clamping oil chamber 103 is also provided. Six connecting holes 107 which connect through from the inner circumferential face to the outer circumferential face are formed in the vicinity of the top end portion of the piston rod 101B, and a ring-shaped retainer 108 holding a steel ball 18 is engaged with and fixed into each of the respective connecting holes 107.

A cylindrical sleeve member 111 for preventing infiltration of cutting chips, dust, or the like, is installed slidably in the upward and downward direction inside the piston member 101, and a spring 112 for elastically urging the sleeve member 111 in an upward direction is disposed inside the sleeve member 111, the lower end of the sleeve member 111 abutting against a spring receiving member 113 which receives the spring 112, and the spring receiving member 113 being screw fitted into the piston 101a. In a state where the pallet 3A is separated from the base body 2A, the sleeve member 111 is driven by the spring 112 to the upper end of the piston rod 101b, and cutting chips, dust, or the like, are prevented from infiltrating into the interior of the piston member 101. In an unclamped state of clamped state of the pallet 2A, the lower end face of the engaging shaft section 92 abuts against the upper end face of the sleeve member 111, and under the weight of the pallet 3A, the sleeve member 111 is pressed down against the action of the spring 112.

The engaging mechanism 41A is constituted by the aforementioned guide member 82, the engaging shaft section 92 formed in the bush 31A, the six connecting holes 107 formed in the piston rod 101B, the six steel balls 18, and the six retainers 108, and the like. A tapered face 82a for guiding the movement of the steel balls 18 towards the axis 84 during clamping is formed on the inner circumferential face of the upper half portion of the guide member 82, and a ring-shaped engaging section 82b which drives the steel balls 18 towards the axis 84 is formed on the lower end of the tapered face 82a. Each of the steel balls 18 is held movably in the radial direction in a retainer 108 fitted set inside a connecting hole 107. When the piston rod 101b descends during clamping, in accordance with this, the steel balls 18 move towards the axis 84 along the tapered face 82a of the guide member 82, whereupon they engage with the ring-shaped engaging section 82b and are pressed towards the axis 84, the steel balls 18 engage with the engaging section 92b of the engaging shaft section 92, and a clamping force is transmitted via the bush 31A to the pallet 3A.

The first positioning mechanism 5 and the second positioning mechanism 6 are similar to those of the embodiment described above, and the first tapered pin 60 and the second tapered pin 66 are accommodated respectively in the accommodating holes 15, 16 of the large diameter section 80a, and are fixed to the reference body 11A by means of holts 63, 69.

To describe the operation of this positioning and fixing device 1A, when hydraulic pressure is supplied to the clamping oil chamber 103 in a state where no hydraulic pressure is supplied to the clamping release oil chamber 104, and the piston 101a is driven downwards by the hydraulic pressure, then the piston rod 101b also moves downwards. Therefore, the steel balls 18 installed movably in the rearward direction in the piston rod 101b move towards the axis 84 along the tapered face 82a of the guide member 82, whereupon they engage with the ring-shaped engaging section 82b, are pressed towards the axis 84, and the steel balls 18 then engage with the taper shaped engaging section 92b formed in the engaging shaft section 92. Consequently, a clamping force is transmitted to the pallet 3A via the steel balls 18 and the bush 31A, and the pallet 3A is pulled towards and fixed to the base body 2A.

In this case, the abutting face 37A of the pallet 3A abuts against the receiving face 14A of the base body 2A, thereby causing the pallet 3A to be positioned to a high degree of accuracy with respect to the base body 2A, in the vertical direction.

The positioning in the horizontal direction as achieved by means of the first positioning mechanism 5 and the second positioning mechanism 6 is similar to the embodiment described above and explanation thereof is omitted here.

According to this positioning and fixing device 1A for the pallet, similarly to the embodiment described above, the pallet 3A can be positioned in the vertical direction by means of the abutting face 37A of the pallet abutting against the receiving face 14A of the base body 2A, whilst the pallet can be positioned to a high degree of accuracy in the horizontal direction by means of the first positioning mechanism 5 and the second positioning mechanism 6. Moreover, since the tubular shaped section 80A of the upper reference body 80 accommodated in the recessed hole 91 of the bush 31A is relatively short in the clamped state, then when changing the pallet 3A, it is possible to eject the pallet 3A from the base body 2A simply by raising it a short distance.
3) As shown in Fig. 12, in a base body 2B of a positioning and fixing device 1B for a pallet, in addition to providing a first positioning mechanism 5B for positioning a pallet in the horizontal direction with respect to a clamping mechanism 4B, it is also possible to provide a second positioning mechanism 6B for positioning the pallet in such a manner that it does not rotate about a vertical axis, on the other side of the clamping mechanism 4B, and it is also possible to provide two positioning mechanisms 120, 121 on either side of the clamping mechanism 4B. The respective positioning mechanisms 5B, 6B, 120, 121 each have a receiving face provided on the base body 2B and an abutting face provided on the pallet, it is possible to position the pallet in the vertical direction by abutting the abutting faces against the receiving faces, respectively. Even if the positioning mechanisms 120, 121 can only carry out positioning in the vertical direction, it is also possible to adopt mechanisms such as the first and second positioning mechanisms 5B, 6B which are capable of carrying out positioning in the vertical direction and the horizontal direction.
4) The aforementioned embodiment and the modifications thereof were described with respect to an example of a clamping mechanism of a type which performs clamping by means of steel balls, but the clamping mechanism is not limited to that described above, and various conventional commonly known clamping mechanisms may be applied.
5) The aforementioned embodiment and the modifications thereof were applied to an example of a case where the base body is fixed to the table of a machine tool, but they might also be applied to a base body which is disposed in the form of an actual table.

## Claims

1. A pallet positioning and fixing device for positioning and fixing releasably a work piece holding pallet on a base body provided on a table or provided as the table itself of a machine tool, **characterized in that**:
a horizontal receiving face is formed on an upper face of said base body, and an abutting face capable of positioning said pallet in a horizontal attitude by abutting against said receiving face is provided on a lower face of said pallet;
a single set of clamping mechanism capable of pulling said pallet towards said base body and fixing the same thereto is provided substantially in the central portion of said base body and said pallet; and
a first positioning mechanism for positioning said pallet in a horizontal direction with respect to said base body is provided on one side of said clamping mechanism, and a second positioning mechanism for positioning said pallet with respect to said base body so as to prevent said pallet from rotating about a vertical axis is provided on the other side of said clamping mechanism.

2. A pallet positioning and fixing device according to claim 1, **characterized in that** said first positioning mechanism comprises a full circumference tapered shaft section fixed to said base body and a first tapered collet provided on said pallet in such a manner that said first tapered collet can be fitted tightly over said full circumference tapered shaft section from above.

3. A pallet positioning and fixing device according to claim 2, **characterized in that** said second positioning mechanism comprises a two face tapered shaft section fixed to said base body and a second tapered collet provided on said pallet in such a manner that said secondd tapered collet can be fitted over said two face tapered shaft section from above.

4. The pallet positioning and fixing device according to any one of claims 1 to 3, **characterized in that** said receiving face is a ring shaped face of a predetermined width and is formed as a ring shaped face which substantially intersects with said first and second positioning mechanisms.

5. A pallet positioning and fixing device according to claim 3, **characterized in that** elastic members for respectively urging said first and second tapered collets elastically in a downward direction are provided.
